## Europäisches Patentamt
## European Patent Office
## Office européen des brevets

(11) Veröffentlichungsnummer : **0 017 166**
**B1**

(12) ## EUROPÄISCHE PATENTSCHRIFT

(45) Veröffentlichungstag der Patentschrift :
02.12.81

(51) Int. Cl.³ : **B 27 B 5/06**

(21) Anmeldenummer : **80101621.3**

(22) Anmeldetag : **27.03.80**

(54) Vorrichtung zum automatischen Aufteilen einer Platte.

(30) Priorität : 28.03.79 DE 2912255

(43) Veröffentlichungstag der Anmeldung :
15.10.80 (Patentblatt 80/21)

(45) Bekanntmachung des Hinweises auf die Patenterteilung : 02.12.81 Patentblatt 81/48

(84) Benannte Vertragsstaaten :
BE IT

(56) Entgegenhaltungen :
DE - A - 2 330 476
DE - C3 - 2 523 034

(73) Patentinhaber : **F. Meyer & Schwabedissen GmbH & Co. KG**
**Diebrocker Strasse 3-7**
**D-4900 Herford (DE)**

(72) Erfinder : **Wessel, Karl-Heinz**
**Krugweg 18**
**D-4973 Vlotho (DE)**
Erfinder : **Salmon, Ingo**
**Schulstrasse 94**
**D-4901 Hiddenhausen 2 (DE)**

(74) Vertreter : **Gramm, Werner, Dipl.-Ing. et al**
**Patentanwälte Gramm + Lins Theodor-Heuss-Strasse 2**
**D-3300 Braunschweig (DE)**

Imprimerie Jouve, 17, rue du Louvre, 75001 Paris, France

## Vorrichtung zum automatischen Aufteilen einer Platte

Die Erfindung betrifft eine Vorrichtung zum automatischen Aufteilen einer Platte bzw. eines Plattenpaketes auf einem Arbeitstisch, der von einem über die Länge des Tisches verfahrbaren Sägenportal überspannt wird, an dem zumindest eine in die gewünschte Schnittposition verschiebbare Längstrennsäge angeordnet ist, der zur Aufnahme und Positionierung des Plattenpaketes über die Ebene des Arbeitstisches anhebbare und in bzw. unter diese Ebene absenkbare, in parallelen Längsreihen angeordnete Tischrollen aufweist und mit einer Abräumeinrichtung zum Abtransport zumindest eines Längssäumlings versehen ist, die für ihre Ruhestellung aus dem Bereich des Längssäumlings aussteuerbar und für ihre Arbeitsstellung in diesen Bereich einsteuerbar ist.

Eine derartige Vorrichtung läßt sich der DE-PS 25 23 034 entnehmen. Hier ist an dem Aggregat einer Längstrennsäge ein zum Abtransport des einen Längssäumlings bestimmter Abräumer vorgesehen, der aus einer Klappe besteht, die in Ruhestellung aus dem Förderweg der Platte bzw. des Plattenpaketes hochgeklappt und für ihre Arbeitsstellung in den Förderweg des Längssäumlings herunterschwenkbar ist. Nach Durchführung des entsprechenden Längsbesäumschnittes wird das Sägenportal wieder in seine Ausgangsstellung zurückgefahren, die Abräumer-Klappe wird nach unten verschwenkt, und das Sägenportal wird dann wieder über die Länge der Platte bzw. des Plattenpaketes verfahren. Dabei hintergreift die genannte Klappe den zuvor abgetrennten Längssäumling und schiebt diesen in Längsrichtung von dem Arbeitstisch herunter.

Diese Ausführungsform hat sich in der Praxis an sich bewährt. Nachteilig ist die für den Abtransport des Längssäumlings erforderliche Verschiebung des Sägenportals. Dieser Arbeitstakt ist insbesondere bei Verarbeitung sehr langer Platten zeitaufwendig und verringert die Gesamtkapazität der Anlage. Außerdem ist die Abförderung über das eine Stirnende des Arbeitstisches dann nachteilig, wenn hier ein Beschickungstisch o. dgl. vorgeschaltet ist, da dann wenig Raum zum Abwurf und Abtransport der Längssäumlinge verbleibt.

Bei der vorbekannten Vorrichtung wird nur der eine der beiden Längssäumlinge in der vorstehend beschriebenen Art abgefördert. Für den anderen Längssäumling ist an der Längsseite des Arbeitstisches ein quer zum Tisch verschiebbares Richtlineal zum Ausrichten des Plattenpaketes vorgesehen. Dieses Richtlineal kann in die Ebene des Arbeitstisches verschwenkt werden. Das Plattenpaket wird nach Durchführung des entsprechenden Längsbesäumschnittes zusammen mit dem Längssäumling quer zur Längsrichtung so weit verschoben, daß der Längssäumling auf dem Richtlineal liegt, das anschließend nach unten verschwenkt wird und so den Längssäumling abwirft. Bei diesem Konzept kann als nachteilig angesehen werden, daß zur Abförderung des Längssäumlings das gesamte Plattenpaket quer zur üblichen Förderrichtung verschoben werden muß. Abgesehen von dem hierfür erforderlichen Arbeitstakt erscheint die Verschiebung des Plattenpaketes wegen der niemals ganz auszuschließenden Gefahr einer Beschädigung der untersten Plattenseite nachteilig.

Die DE-OS 23 30 476 offenbart eine Plattenaufteileinrichtung, die eine in Horizontalrichtung verschiebbare Formatkreissäge mit einem sich in Verschieberichtung dieser Säge erstreckenden Maschinentisch aufweist. Zu beiden Seiten des Maschinentisches ist je ein Auflagetisch angeordnet. Oberhalb der Ebene dieses Auflagetisches ist ein Einschubaggregat vorgesehen. Außerdem sind in den Auflagetisch nach oben gerichtete Luftaustrittsöffnungen vorgesehen und/oder Bänder und/oder Rollen heb- und senkbar angeordnet. Mit dem Problem des Abförderns der Längssäumlinge befaßt sich diese Vorveröffentlichung nicht. Soweit Schnittabfälle überhaupt, erwähnt sind, handelt es sich um stirnseitige Säumlinge, die durch einen Längsspalt vor einer Anschlagleiste hindurchfallen sollen.

Der Erfindung liegt die Aufgabe zugrunde, für die eingangs erläuterte Vorrichtung zum Abfördern des Längssäumlinge eine Einrichtung zu entwickeln, die bei größtmöglicher Schonung der Platten und geringem Raumbedarf ein schnelleres Abfördern gewährleistet.

Diese Aufgabe wird gemäß der Erfindung dadurch gelöst, daß die im äußeren Längsbereich des Arbeitstisches angeordneten Tischrollen unter die Förderebene (Arbeitsstellung) von in demselben Bereich angeordneten, die Abräumeinrichtung bildenden Querförderern absenkbar sind, wobei die Querförderer aus einer in bzw. unter der Ebene des Arbeitstisches liegenden Ruhestellung in eine über dieser Ebene liegende Arbeitsstellung anhebbar sind, die unter der Auflagerebene der übrigen, unabhängig von den im Bereich der Längssäumlinge liegenden Tischrollen gesteuerten, angehobenen Tischrollen liegt.

Insbesondere beim vollautomatischen Buntaufteilen einer Platte bzw. eines Plattenpaketes wird das Plattenpaket auf dem Arbeitstisch mehrfach verschoben, so daß sich hierfür immer alle vorhandenen Tischrollen in angehobener Position befinden müssen. Nachdem das Plattenpaket auf den Arbeitstisch gefördert und in richtige Position gebracht worden ist, werden alle Tischrollen unter die Ebene des Arbeitstisches abgesenkt. In dieser Lage sind die Rollen geschützt und können durch die Sägeblätter nicht beschädigt werden. Nachdem das Plattenpaket in üblicher Weise durch Spannhaken o. dgl. festgelegt und die Längstrennsägen auf dem Sägenportal positioniert worden sind, wird das Sägenportal über die Länge des Tisches verfahren, wobei der Längsbesäumschnitt bzw. die beiden Längsbesäumschnitte durchgeführt werden. Die Querförderer liegen hierbei ebenso wie die Tischrollen unterhalb der Ebene des Arbeitstisches. Anschließend werden die Spannhaken gelüftet und zumindest die unterhalb des nach dem Längsschnitt verbleibenden Nutzpaketes liegenden Tischrollen angehoben. Es werden also entweder diejenigen Tischrollen-Längsreihen, die jenseits des Längstrennschnittes liegen, nicht zusammen mit den übrigen Tischrollen angehoben, oder aber nach dem gemeinsamen Hub wieder abgesenkt. In jedem Fall also wird lediglich das Nutzpaket über die Ebene des Arbeitstisches angehoben. Gleichzeitig werden auch die Querförderer in ihre Arbeitsstellung angehoben, jedoch nur so weit, daß ihre Förderebene noch unterhalb der durch die angehobenen Tischrollen gebildeten Auflagerebene liegt. Bei dieser Hubbewegung übernehmen die Querförderer den noch auf dem Arbeitstisch liegenden Längssäumling, der dann über die Querförderer zur Längsseite des Arbeitstisches abgefördert und dort abgeworfen wird. Der den Hub der Querförderer bewirkende Impuls kann zugleich auch die Einschaltung eines Getriebemotors o. dgl. zum Antrieb der Querförderer bewirken.

Das Plattenpaket braucht somit für die Abförderung der Längssäumlinge nicht verschoben zu werden. Ebenso ist die bisher notwendige Verschiebung des Sägenportals über die gesamte Plattenlänge nicht mehr erforderlich. Das Abfördern der Längssäumlinge läßt sich sehr schnell durchführen, wobei gleichzeitig das Nutzpaket in Längsrichtung abgefördert werden könnte, so daß sich sehr kurze Taktzeiten ergeben.

Die Auswahl der jeweils abzusenkenden Tischrollen-Längsreihen erfolgt vorzugsweise über die Positionierung der den Längsbesäumschnitt durchführenden Längstrennsäge bzw. -sägen. So können an dem Sägenportal entsprechende Endschalter vorgesehen werden, die beim Positionieren der Säge, also bei ihrer Verschiebung gegenüber dem Sägenportal beaufschlagt werden. Dadurch entfällt die Notwendigkeit, das Plattenpaket immer so ausrichten zu müssen, daß der Längsbesäumschnitt immer an der gleichen Stelle durchgeführt wird.

Die Querförderer können endlos umlaufende Förderketten sein.

Die Tischrollen, die unabhängig davon absenkbaren Tischrollen-Längsreihen sowie die Querförderer können auf einem gemeinsamen Hubrahmen montiert sein. Insbesondere bei dieser Lösung ist es zweckmäßig, wenn die Tischrollen in zwei verschiedene Höhen über die Ebene des Arbeitstisches anhebbar sind. Es kann dann zur Vorbereitung der Abförderung der Längssäumlinge der Hubrahmen um zwei Schritte angehoben werden. In dieser Position nehmen dann die Tischrollen ihre höchste Stellung ein, während die Querförderer unterhalb der Tischrollen aber über der Ebene des Arbeitstisches liegen. Um den Abtransport der von den Querförderern aufgenommenen Längssäumlinge nicht zu stören, werden die jenseits des Längsbesäumschnittes liegenden Tischrollen-Längsreihen unter die Förderebene der Querförderer abgesenkt. Nachdem alle Längssäumlinge abgeräumt sind, werden die zuvor abgesenkten Tischrollen-Längsreihen wieder in die höchste Stellung angehoben, um dann zusammen mit den übrigen Tischrollen durch Absenken des gemeinsamen Hubrahmens um zwei Schritte nach unten unter die Ebene des Arbeitstisches abgesenkt zu werden. Ist dann das Nutzpaket programmgerecht aufgeteilt, wird der Hubrahmen um nur einen Schritt angehoben, wobei dann alle Tischrollen die Ebene des Arbeitstisches etwas überragen, während die Querförderer noch unterhalb dieser Ebene liegen. In dieser Abräum- bzw. Beschickstellung der Tischrollen kann das aufgeteilte Plattenpaket abgeräumt und das folgende, noch aufzuteilende Paket gleichzeitig in Position gefahren werden.

Zum Abtransport der abgeförderten Längssäumlinge kann im Abwurfbereich unterhalb der Querförderer ein Transportband angeordnet sein.

In der Zeichnung ist eine als Beispiel dienende Ausführungsform der Erfindung schematisch dargestellt. Es zeigen :

Figur 1 im Ausschnitt einen Querschnitt durch einen Arbeitstisch mit einer in Arbeitsstellung befindlichen Abräumeinrichtung für einen Längssäumling ;

Figur 2 in verkleinertem Maßstab einen Längsschnitt gemäß der Linie II-II in Figur 1, wobei sich alle Tischrollen in ihrer Beschick- und Abräumstellung befinden und

Figur 3 die Darstellung gemäß Figur 2, bei der sich die Tischrollen jedoch in ihrer Säumlingabwurfstellung befinden.

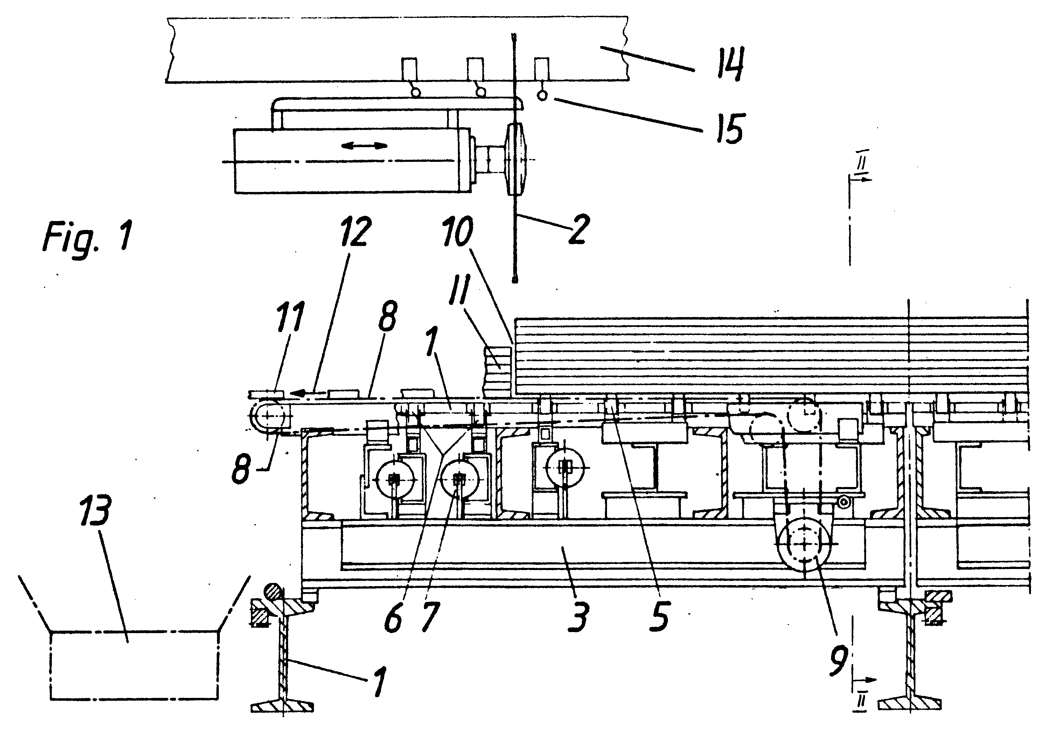

Figur 1 zeigt den linken äußeren Längsbereich eines Arbeitstisches 1, der von einem über die Länge des Tisches verfahrbaren, in der Zeichnung nur angedeuteten Sägenportal 14 überspannt wird, an dem zumindest eine Längstrennsäge 2 angeordnet ist, die an dem Portal quer zum Arbeitstisch in die gewünschte Schnittposition verschiebbar ist. Unter dem Arbeitstisch 1 ist ein Hubrahmen 3 angeordnet, der über einen Mehrstellungszylinder 4 in eine obere, mittlere sowie eine untere Position anhebbar bzw. absenkbar ist.

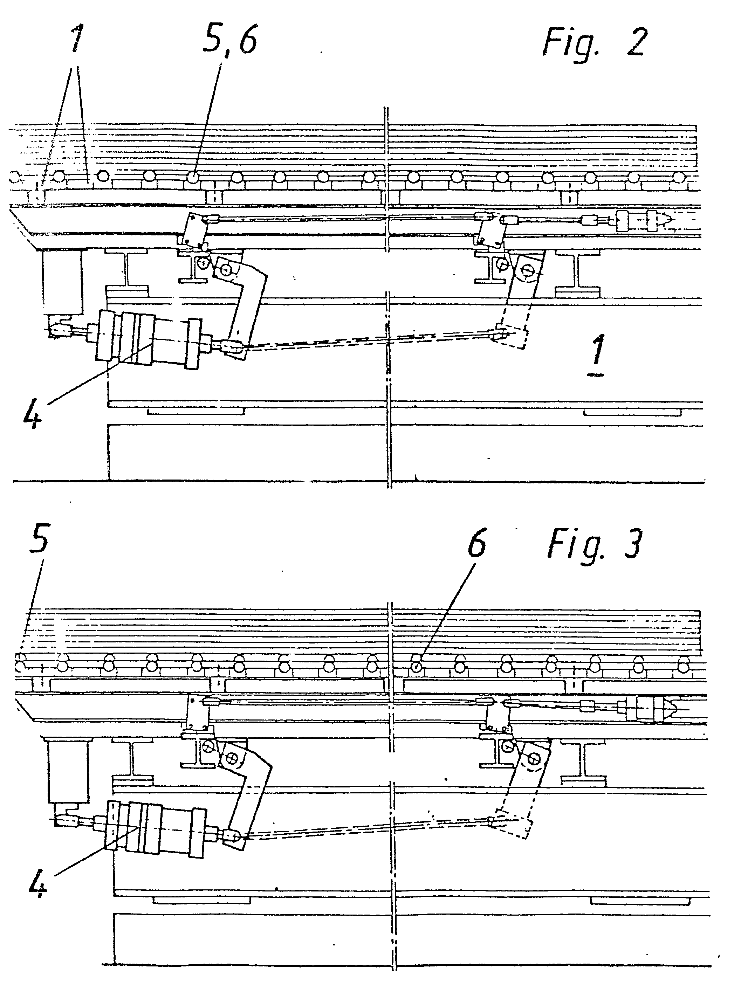

Auf dem Hubrahmen 3 sind Tischrollen 5 montiert, die in der oberen Stellung des Hubrahmens die in den Figuren 1 und 3 dargestellte höchste Position über der Ebene des Arbeitstisches und in der mittleren Stellung des Hubrahmens 3 die in Figur 2 dargestellte Position einnehmen, in der die Tischrollen noch etwas über die Ebene des Arbeitstisches hinausragen.

Auf dem Hubrahmen 3 sind ferner im äußeren Längsbereich des Arbeitstisches Tischrollen-Längsreihen 6 angeordnet, die über Steuerzylinder 7 unabhängig von den Tischrollen 5 in die in den Figuren 1 und 3 dargestellte untere Position abgesenkt werden können.

Schließlich trägt der Hubrahmen 3 Querförderer 8, die durch endlos umlaufende Förderketten gebildet sind und von einem Getriebemotor 9 angetrieben werden. In der in Figur 1 dargestellten oberen Position des Hubrahmens liegen die Querförderer 8 mit ihrer Förderebene etwas oberhalb von der Ebene des Arbeitstisches 1, aber etwas unterhalb von der durch die Tischrollen 5 gebildeten Auflagerfläche. In der in Figur 2 dargestellten mittleren Position des Hubrahmens 3 liegen die in dieser Figur nicht dargestellten Querförderer 8 in bzw. etwas unterhalb der Ebene des Arbeitstisches 1.

Figur 1 zeigt ein Plattenpaket, dessen nach Durchführung des Längsbesäumschnittes 10 verbleibendes Nutzpaket auf den Tischrollen 5, 6 aufliegt, während der abgetrennte Längssäumling 11 auf den Querförderern 8 liegt. Der Pfeil 12 zeigt die Förderrichtung der Querförderer 8. Außerdem ist ein einzelner Längssäumling 11 kurz vor seinem Abwurf von den Querförderern 8 dargestellt.

Im Abwurfbereich unterhalb der Querförderer 8 ist ein Transportband 13 angeordnet (siehe strichpunktierte Darstellung in Figur 1), das die abgeworfenen Längssäumlinge 11 auffängt und zu einer Verwertungsstelle abtransportiert.

Die Auswahl der jeweils abzusenkenden Tischrollen-Längsreihen 6 erfolgt über die Positionierung der den Längsbesäumschnitt 10 durchführenden Längstrennsäge 2. Hierfür sind an dem Sägenportal 14 entsprechende Endschalter 15 vorgesehen, die beim Positionieren der Säge, also bei ihrer Verschiebung gegenüber dem Sägenportal, beaufschlagt werden.

**Ansprüche**

1. Vorrichtung zum automatischen Aufteilen einer Platte bzw. eines Plattenpaketes auf einem Arbeitstisch (1), der von einem über die Länge des Tisches verfahrbaren Sägenportal (14) überspannt wird, an dem zumindest eine in die gewünschte Schnittposition verschiebbare Längstrennsäge (2) angeordnet ist, der zur Aufnahme und Positionierung des Plattenpaketes über die Ebene des Arbeitstisches (1) anhebbare und in bzw. unter diese Ebene absenkbare, in parallelen Längsreihen (6) angeordnete Tischrollen (5) aufweist und mit einer Abräumeinrichtung (8, 9) zum Abtransport zumindest eines Längssäumlings (11) versehen ist, die für ihre Ruhestellung aus dem Bereich des Längssäumlings aussteuerbar und für ihre Arbeitsstellung in diesen Bereich einsteuerbar ist, dadurch gekennzeichnet, daß die im äußeren Längsbereich des Arbeitstisches (1) angeordneten Tischrollen (6) unter die Förderebene (Arbeitsstellung) von in demselben Bereich angeordneten, die Abräumeinrichtung bildenden Querförderern (8) absenkbar sind, wobei die Querförderer (8) aus einer in bzw. unter der Ebene des Arbeitstisches (1) liegenden Ruhestellung in eine über dieser Ebene liegende Arbeitsstellung anhebbar sind, die unter der Auflagerebene der übrigen, unabhängig von den im Bereich der Längssäumlinge (11) liegenden Tischrollen (6) gesteuerten, angehobenen Tischrollen (5) liegt.

2. Vorrichtung nach Anspruch 1, dadurch gekennzeichnet, daß die Auswahl der jeweils abzusenkenden Tischrollen-Längsreihen (6) über die Positionierung der den Längsbesäumschnitt (10) durchführenden Längstrennsäge (2) erfolgt.

3. Vorrichtung nach Anspruch 1 oder 2, dadurch gekennzeichnet, daß die Querförderer (8) endlos umlaufende Förderketten sind.

4. Vorrichtung nach Anspruch 1, 2 oder 3, dadurch gekennzeichnet, daß die Tischrollen (5), die unabhängig davon absenkbaren Tischrollen-Längsreihen (6) sowie die Querförderer (8) auf einem gemeinsamen Hubrahmen (3) montiert sind.

5. Vorrichtung nach einem der vorhergehenden Ansprüche, dadurch gekennzeichnet, daß die Tischrollen (5) in zwei verschiedene Höhen über die Ebene des Arbeitstisches (1) anhebbar sind.

6. Vorrichtung nach einem der vorhergehenden Ansprüche, dadurch gekennzeichnet, daß im Abwurfbereich unterhalb der Querförderer (8) ein Transportband (13) angeordnet ist.

**Claims**

1. Device for automatically dividing a board or a packet of boards on a working table (1) which is surmounted by a saw portal (14) movable along the length of the table and comprising a longitudinal cutting saw (2) movable into the desired cutting position, whereby the table is provided with table rollers (5) for holding and positioning the packet of boards, which table rollers are arranged in parallel longitudinal rows (6) which can be raised above or lowered into or below the plane of the working table (1), and further with a removal facility (8, 9) for removing at least one longitudinal trimming (11) which removal facility can be manoeuvered out of the area of the longitudinal trimming into the neutral position as well as manoeuvred into this area into the working position, characterized in that the table rollers (6) arranged in the outer longitudinal area of the working table (1) can be lowered below the conveying plane (working position) of transverse conveyors (8) arranged in the same area and forming the removal facility, whereby the transverse conveyors (8) can be raised from a neutral position in or below the plane of the working table (1) into a working position above this plane, which is below the bearing plane of the remaining raised table rollers (5) which are controlled independently of the table rollers (6) situated in the area of the longitudinal trimming (11).

2. Device according to claim 1, characterized in that the selection of the longitudinal table-roller rows (6) to be lowered at any one time is made via the positioning of the longitudinal cutting saw (2) performing the longitudinal trim (10).

3. Device according to claim 1 or 2, characterized in that the transverse conveyors (8) are endlessly rotating conveyor chains.

4. Device according to claim 1, 2 or 3, characterized in that the table rollers (5), the longitudinal table-roller rows (6) which can be lowered independently of the former and the transverse conveyors (8) are mounted on a common lifting frame (3).

5. Device according to one of the preceding claims, characterized in that the table rollers (5) can be raised to two different levels above the plane of the working table (1).

6. Device according to one of the preceding claims, characterized in that a conveyor belt (13) is arranged within the range of discharge below the transverse conveyors (8).

**Revendications**

1. Installation pour la division automatique d'un panneau ou d'un paquet de panneaux sur une table de travail (1), qui est surmontée d'un portique de sciage (14) pouvant être déplacé longitudinalement au-dessus de la table et auquel est fixée au moins une scie de débit longitudinal (2) pouvant être amenée par coulissement dans la position de coupe souhaitée, qui présente, pour la réception et le positionnement du paquet de panneaux, des rouleaux de table (5) disposés en rangées longitudinales parallèles (6) et pouvant être soulevés au-dessus du plan de la table de travail (1) ou être abaissés en dessous de ce plan, et qui est pourvue d'un dispositif d'évacuation (8, 9) destiné à l'enlèvement d'au moins une bande longitudinale (11) et pouvant être guidé pour sa mise au repos, en dehors du domaine de la bande longitudinale et pour sa mise en action en position de travail, dans ce domaine, caractérisée en ce que les rouleaux de table (6) disposés dans la zone longitudinale extérieure de la table de travail (1) peuvent être abaissés en dessous du plan de transport (position de travail) de dispositifs de transport transversal (8) formant le dispositif d'évacuation qui sont disposés dans le même domaine, étant entendu que les dispositifs de transport transversal (8) peuvent être soulevés à partir d'une position de repos située dans le plan de la table de travail (1) ou en dessous de celui-ci jusque dans une position de travail située au-dessus de ce plan, cette position de travail se trouvant en dessous du plan d'appui des autres rouleaux de table (5) guidés et soulevés, indépendamment des rouleaux de table (6) se trouvant dans le domaine des bandes longitudinales (11).

2. Installation suivant la revendication 1, caractérisée en ce que le choix des rangées longitudinales de rouleaux de table (6) à abaisser à chaque fois dépend du positionnement de la scie de débit longitudinal (2) exécutant la coupe en bande longitudinale (10).

3. Installation suivant la revendication 1 ou 2, caractérisée en ce que les dispositifs de transport transversal (8) sont des chaînes transporteuses sans fin.

4. Installation suivant la revendication 1, 2 ou 3, caractérisée en ce que les rouleaux de table (5), les rangées longitudinales de rouleaux de table (6) pouvant être abaissées indépendamment de ces rouleaux (5), ainsi que les dispositifs de transport transversal (8) sont montés sur un cadre de levage (3) commun.

5. Installation suivant l'une quelconque des revendications précédentes, caractérisée en ce que les rouleaux de table (5) peuvent être soulevés à deux hauteurs différentes au-dessus du plan de la table de travail (1).

6. Installation suivant l'une quelconque des revendications précédentes, caractérisée en ce qu'une bande transporteuse (13) est montée dans la zone de déchargement en dessous des dispositifs de transport transversal (8).

Fig. 1

1     5,6     *Fig. 2*

4

*1*

5     6     *Fig. 3*

4

2